# EUROPEAN PATENT APPLICATION

(11) **EP 3 537 359 A1**
(43) Date of publication of application: **11.09.2019**
(21) Application number: 19160505.4
(22) Date of filing: 04.03.2019
(51) Int. Cl.: G06Q 20/20, G07G 1/01, G07G 3/00

(54) **COMMODITY SALES DATA PROCESSING APPARATUS**

(30) Priority: 05.03.2018 JP 2018038312
(71) Applicant: Toshiba Tec Kabushiki Kaisha, 141-8562 Tokyo (JP)
(72) Inventor: Tsuchiya, Osamu, Tokyo, 141-8562 (JP)
(74) Representative: Hoffmann Eitle

(57) **Abstract**

A sales register apparatus, such as point-of-sale terminal, includes a register to perform registration processing for registering a commodity being purchased by a customer and a sound output section to output sounds concerning the registration processing to an operator of the register on one side of the register and the customer on an opposite side of the register. According to an embodiment, the sound output section includes a single speaker to output sounds to both the operator and the customer.

## Description

### CROSS-REFERENCE TO RELATED APPLICATION

This application is based upon and claims the benefit of priority from Japanese Patent Application No. 2018-038312, filed in March 5, 2018, the entire contents of which are incorporated herein by reference.

### FIELD

An embodiment described herein relates generally to a commodity sales data processing apparatus.

### BACKGROUND

There is known a commodity sales data processing apparatus (also known as a checkout apparatus) that is used in a retail store or the like and registers items being purchased by a customer and performs the associated settlement processing. Such a checkout apparatus can provide information to an operator (e.g., store clerk) and/or the customer with audible sounds or voice messages.

However, related art checkout apparatuses have separately provided a speaker for output of sounds to the operator and another speaker for output of sounds to the customer. Therefore, in these checkout systems two independent sound output systems are necessary since the voice messages for the operator and the customer need to be output from the different speakers. Thus, the number of components is increased and the cost is likewise increased. Additionally, the configuration of software for controlling the voice outputs is complicated.

### SUMMARY OF THE INVENTION

One of the objects of the present invention is to improve prior art techniques and overcome at least some of the prior art problems as for instance above illustrated.

According to a first aspect of the present invention, it is provided a sales register apparatus, comprising: a register to perform registration processing for registering a commodity being purchased by a customer; and a sound output section with a single speaker configured to output sounds concerning the registration processing to an operator of the register on one side of the register and the customer on an opposite side of the register.

Optionally, in the sales register apparatus according to the first aspect of the invention, the sound output section outputs an audible signal from a gap in a housing of the register.

Optionally, in the sales register apparatus according to the first aspect of the invention, the register comprises a vertical scanner configured to read code information attached to the commodity, the speaker is above the vertical scanner, and the sound output section simultaneously outputs an audible signal via a first sound propagation path from the speaker to the customer and a second sound propagation path from the speaker to the operator.

Optionally, in the sales register apparatus according to the first aspect of the invention, a primary sound output direction of the speaker is upward.

Optionally, in the sales register apparatus according to the first aspect of the invention, the register includes an adjustable display mount above the vertical scanner for mounting an operator display, and the speaker is positioned such that each of the first and second sound propagation paths comprises a portion passing through an opening in the adjustable display mount.

Optionally, in the sales register apparatus according to the first aspect of the invention, the register includes an adjustable display mount for mounting an operator display, and the speaker is positioned such that each of the first and second sound propagation paths comprises a portion passing through an opening in the adjustable display mount.

Optionally, in the sales register apparatus according to the first aspect of the invention, the register comprises a vertical scanner configured to read code information attached to the commodity, the speaker is below the vertical scanner, and the sound output section simultaneously outputs an audible signal via a first sound propagation path from the speaker to the customer and a second sound propagation from the speaker to the operator.

Optionally, in the sales register apparatus according to the first aspect of the invention, a primary sound output direction of the speaker is downward.

Optionally, in the sales register apparatus according to the first aspect of the invention, each of the first and second sound propagation paths includes a plurality of holes in an outer surface of a housing of the register.

Optionally, in the sales register apparatus according to the first aspect of the invention, each of the first and second sound propagation paths includes a plurality of holes in an outer surface of a housing of the register.

Optionally, in the sales register apparatus according to the first aspect of the invention, the sound output section outputs audible signals for the customer and audible signals for the operator without distinguishing audible signals types by intended recipient.

Optionally, the sales register apparatus according to the first aspect of the invention further comprises an operator display mounted on the register, wherein the speaker is on an upper end portion of the operator display.

Optionally, in the sales register apparatus according to the first aspect of the invention, the sounds include at least one of recorded voice messages and tones.

According to a second aspect of the present invention, it is provided a point-of-sale terminal, comprising: a housing having a customer side and an operator side; a vertical scanner in the housing for reading commodity information; a tiltable display mount on the housing above the vertical scanner; an operator display mounted on the tiltable display to face the operator side; and a sound output section with a single speaker configured to simultaneously output sounds concerning registration processing to an operator on the operator side of the housing and a customer on the customer side of the housing, wherein the sound output section simultaneously outputs the sound from the single speaker via a first sound propagation path from the speaker to the customer and a second sound propagation path from the speaker to the operator.

Optionally, in the point-of-sale terminal according to the second aspect of the invention, the speaker is on an upper end of the operator display and facing upward.

Optionally, in the point-of-sale terminal according to the second aspect of the invention, the speaker is on an upper end of the housing adjacent to the tiltable display mount.

Optionally, in the point-of-sale terminal according to the second aspect of the invention, the speaker is in the housing below the vertical scanner and facing downward.

Optionally, in the point-of-sale terminal according to the second aspect of the invention, each of the first and second sound propagation paths includes a plurality of holes in an outer surface of the housing.

Optionally, in the point-of-sale terminal according to the second aspect of the invention, the sound output section outputs sounds intended for the customer and sounds intended for the operator without distinguishing audible signals types by intended recipient.

### DESCRIPTION OF THE DRAWINGS

FIG. 1 depicts a point-of-sale (POS) system according to an embodiment.
FIG. 2 depicts as store layout for a POS terminal and accounting apparatuses.
FIG. 3A is an exterior perspective view of a POS terminal as viewed from an operator side.
FIG. 3B is an exterior perspective view of a POS terminal viewed from a customer side.
FIG. 4 is an exterior perspective view of an accounting apparatus.
FIG. 5 depicts an attachment structure of a speaker set in the POS terminal.
FIG. 6 is a cross-sectional view of an upper portion of a vertical scanner.
FIG. 7 depicts aspects of a hardware configuration of a POS system.
FIG. 8 schematically depicts a functional configuration of the POS system.
FIG. 9 is a flowchart depicting aspects of processing performed by a POS system.
FIG. 10 depicts an attachment structure of a speaker according to a second attachment example.
FIG. 11 depicts an attachment structure of a speaker according to a third attachment example.

### DETAILED DESCRIPTION

In general, according to one embodiment, a sales register apparatus, such as point-of-sale terminal, includes a register (or register section) to perform registration processing for registering a commodity being purchased by a customer and a sound output section with a single speaker configured to output sounds concerning the registration processing to an operator of the register on one side of the register and the customer on an opposite side of the register.

An example embodiment is explained below with reference to the accompanying drawings. In the example embodiment explained below, a POS system of a semi-self type for use in a retail store is presented one example of a checkout system.

### Overall configuration of a POS system

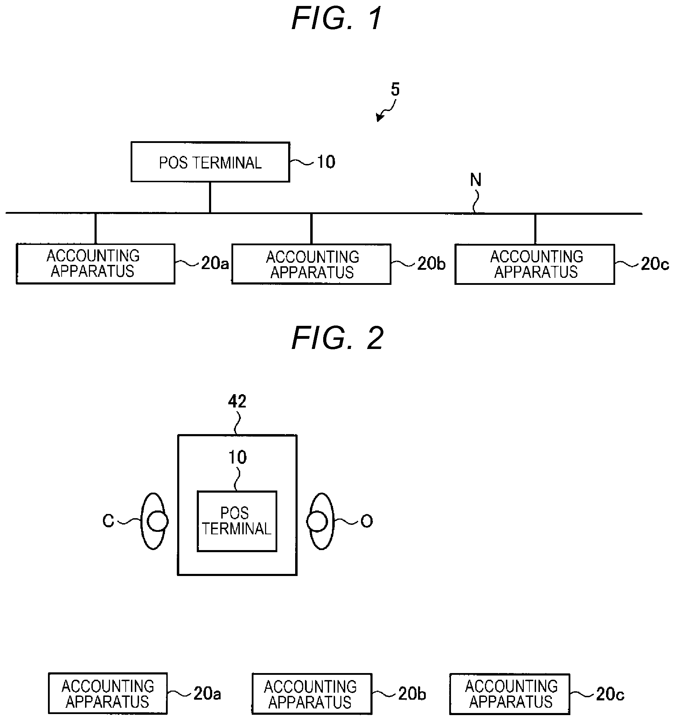

FIG. 1 is a diagram illustrating an example of a system configuration of a POS system 5 according to an embodiment. As illustrated in FIG. 1, the POS system 5 includes one POS terminal 10 and three accounting apparatuses 20a, 20b, and 20c. The POS terminal 10 and the accounting apparatuses 20a, 20b, and 20c are communicably connected via a network N such as a LAN (Local Area Network). The number of the accounting apparatuses 20a, 20b, and 20c connected to the POS terminal 10 is not limited to three and may be any number of one or more.

FIG. 2 is a diagram illustrating an example of a layout of the POS terminal 10 and the accounting apparatuses 20a, 20b, and 20c in a store.

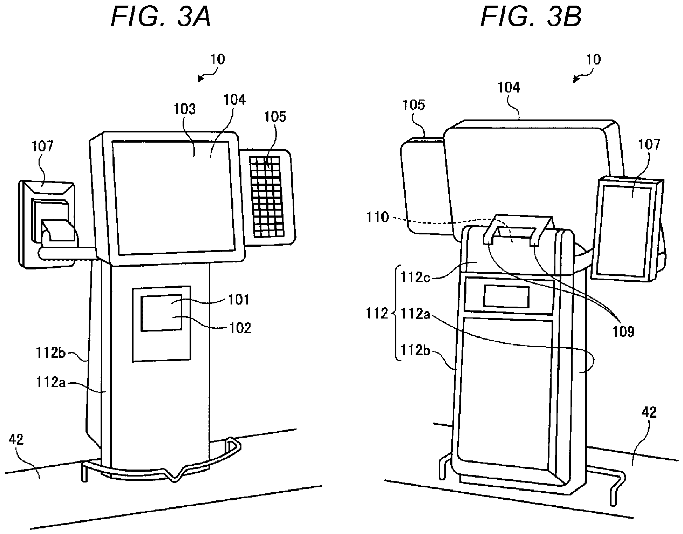

As illustrated in FIG. 2, the POS terminal 10 and the accounting apparatuses 20a, 20b, and 20c are disposed such that the POS terminal 10 and the accounting apparatuses 20a, 20b, and 20c are separated from each other. The POS terminal 10 is set, for example, on a table-like workbench 42. The POS terminal 10 is operated by an operator O, who is a store clerk, and executes registration processing of commodities purchased by a customer C. Specifically, the operator O faces the customer C across the POS terminal 10. The operator O operates a vertical scanner 101 (see FIG. 3A) to read commodities (items) selected by the customer C and thus registers the commodities by inputting commodity identification codes or the like to the POS terminal 10.

When the registration processing is completed for a customer C, the operator O transfers registration information including commodity information (names, unit prices, the numbers of items, and the like), a total amount, and the like to any one of the accounting apparatuses 20a, 20b, and 20c. It is desirable to select an presently available (unused) one of the accounting apparatuses 20a, 20b, and 20c. The operator O may select the apparatus according to his/her own judgement or the POS terminal 10 may automatically select the apparatus according to received information for the operation states of the accounting apparatuses 20a, 20b, and 20c.

Thereafter, the customer C puts the now-registered commodities in a basket or the like and carries the commodities to one of the accounting apparatuses 20a, 20b, and 20c to which the commodity registration information has been transferred. The customer C then performs transaction settlement processing according to sales total amount due by using the selected on of the accounting apparatuses 20a, 20b, and 20c.

### Configuration of the POS terminal

FIGS. 3A and 3B are perspective views illustrating an example of the exterior of the POS terminal 10. FIG. 3A is an exterior perspective view of the POS terminal 10 viewed from the operator O side. FIG. 3B is an exterior perspective view of the POS terminal 10 viewed from the customer side. As illustrated in FIGS. 3A and 3B, the POS terminal 10 includes inside of a housing 112, a vertical scanner 101 including a reading window 102 facing the operator O side. In the vertical scanner 101, an imaging section (not separately illustrated in FIGS. 3A and 3B) is disposed behind the reading window 102. The POS terminal 10 is an example of a sales-data processing apparatus.

The housing 112 covering the vertical scanner 101 includes a front cover 112a facing the operator side, a rear cover 112b facing the customer side, and a head cover 112c that covers an upper part of the vertical scanner 101.

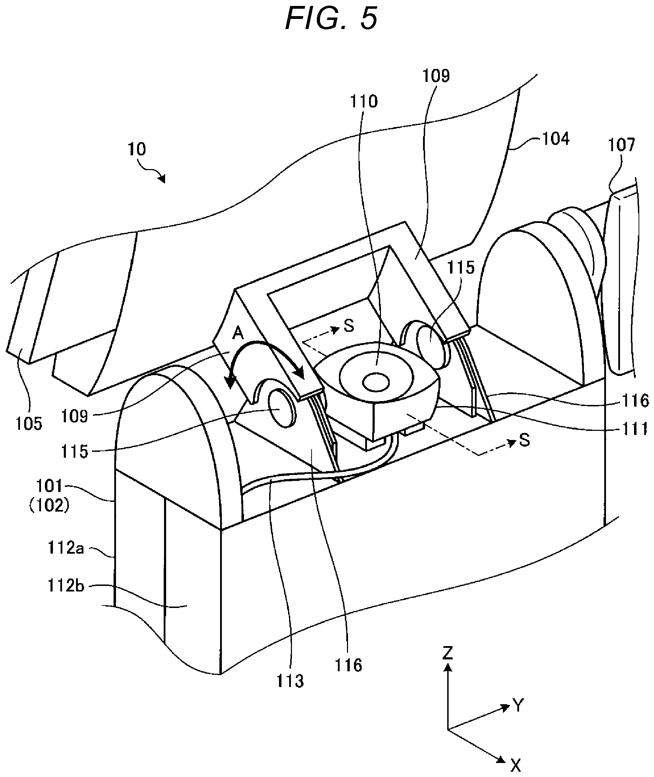

The POS terminal 10 includes an operator-side monitor 104 including a touch panel 103 above the vertical scanner 101 and a keypad 105. A commodity name, a price, and the like of a commodity imaged by the imaging section of the vertical scanner 101 can be displayed on the operator-side monitor 104. The touch panel 103 and the keypad 105 support the input of information concerning a commodity being registered. Two monitor attachment members 109 (each or both representing an example of a tiltable mount) are provided on the rear surfaces of the operator-side monitor 104 and the keypad 105. The bases of the monitor attachment members 109 are rotated about shaft members 115 (see FIG. 5). Therefore, the operator-side monitor 104 and the keypad 105 are adjustable in the height direction of the operator O with the shaft members 115 provided as support shafts. Therefore, the operator O can adjust the operator-side monitor 104 and the keypad 105 to face a direction in which the operator O can easily operate the operator-side monitor 104 and the keypad 105.

When viewed from the operator O side, a customer-side monitor 107 is provided on the left side of the POS terminal 10 and is directed toward the customer C side. Names, unit prices, the numbers of items, a total amount, and the like associated with commodities registered by the POS terminal 10 can be displayed on the customer-side monitor 107. The customer C can confirm a registration state of items by viewing the customer-side monitor 107.

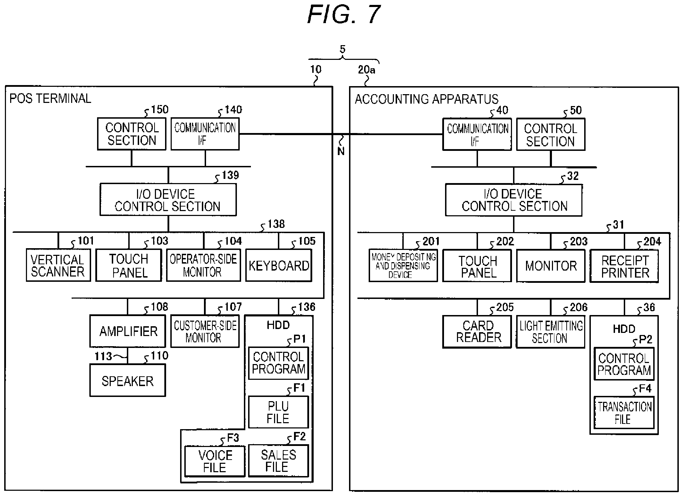

The POS terminal 10 identifies a commodity included in an image captured by the imaging section by reading a code symbol such as a bar code or a QR code® attached to the commodity or by generic object recognition. In this example, POS terminal 10 uniquely specifies a commodity corresponding to a commodity code included in a read code symbol by referring to a PLU file F1 (see FIG. 7) that stores commodity names, prices, and the like for the commodities being sold in the store in association with the commodity codes.

When using generic object recognition for recognizing a commodity, any known recognition technique, for example, such as those explained in the reference:]Keiji Yanai, "Current and Future Statuses of Generic Object Recognition", Journal of Information Processing Society, Vol. 48, No. SIG16 [retrieved on January 5, 2018], Internet URL: http://mm.cs.uec.ac.jp/IPSJ-TCVIM-Yanai.pdf>

The POS terminal 10 displays, on the operator-side monitor 104, a screen for confirming the identification of the commodity and receiving an input of the number of instances of the identified commodity and the like. The POS terminal 10 performs registration of the identified commodity. Here, registration means storing commodity information for a commodity as read out from a PLU file F1 in a storage device (e.g., RAM or an HDD 136 (see FIG. 7)) of the POS terminal 10 in association with the number of items (the number of items being purchased) and the like of the commodity.

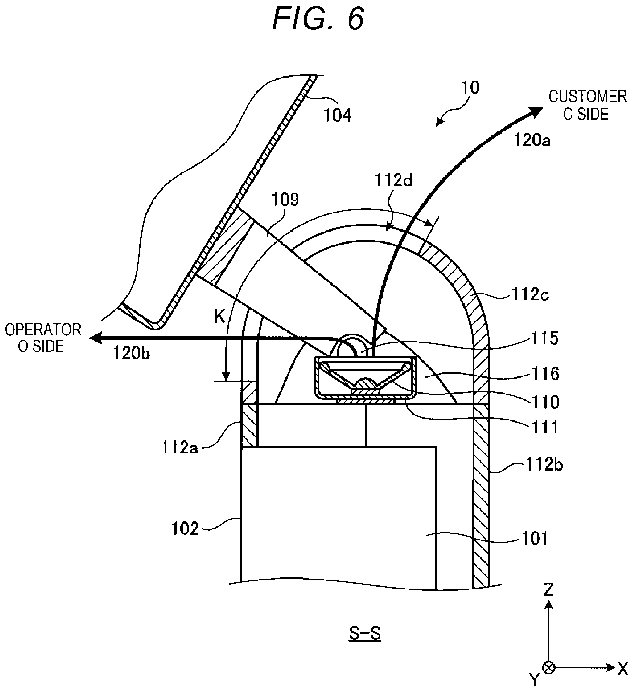

Furthermore, the POS terminal 10 includes one speaker 110 above the vertical scanner 101. The speaker 110 is set to face upward, that is, in a +Z-axis direction. An attachment structure of the speaker 110 is explained in detail below (see FIG. 5 and 6).

The speaker 110 outputs information concerning registration processing to the operator O and the customer C as an audible signal, which may include sounds (tones, beeps, buzzes, etc.) or voices (speech). The sound output by the speaker 110 is, for example, scan tone generated when the vertical scanner 101 identifies a commodity or a beep sound (warning tone) generated if, for example, the operator O performs an incorrect operation. The voice output by the speaker 110 is, for example, voice messages, such as "the total amount is X yen" or "please pass change of Y yen," intended for the operator O or voice messages, such as "Welcome" or "Please perform age confirmation," intended for the customer C. Only the operator O has to hear sounds or voices intended for the operator O and only the customer C has to hear sounds or voices intended for the customer C. However, in the POS terminal 10 of this embodiment, the operator O and the customer C can generally both hear the sounds or the voices intended for the operator O and the sounds or the voices intended for the customer C. By adopting such a configuration, the customer C can monitor what operations the operator O is currently performing. The operator O can similarly recognize the customer C state. Therefore, it is possible to facilitate communication between the operator O and the customer C during the commodity registration processing.

### Configuration of the accounting apparatus

The accounting apparatuses 20a, 20b, and 20c execute accounting processing on the basis of commodity registration information generated at the POS terminal 10. Since the accounting apparatuses 20a, 20b, and 20c have the same configuration, their configuration is explained with reference to the accounting apparatus 20a as an example.

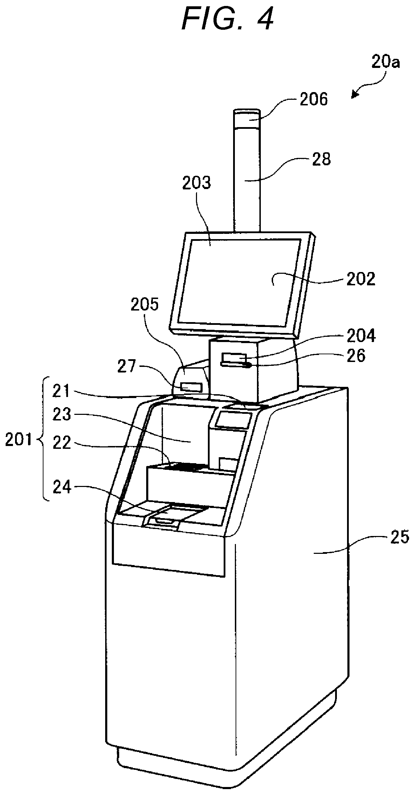

FIG. 4 is an exterior perspective view of the accounting apparatus 20a. As illustrated in FIG. 4, the accounting apparatus 20a includes a money depositing and dispensing device 201, a touch panel 202, a monitor 203, a receipt printer 204, a card reader 205, and a light emitting section 206 above a housing 25.

The money depositing and dispensing device 201 includes a coin depositing port 21, a bill depositing port 22, a bill dispensing port 23, and a coin dispensing port 24. The money depositing and dispensing device 201 stores bills (paper currency) deposited into the bill depositing port 22 in a bill storing section (not specifically illustrated in FIG. 4). The money depositing and dispensing device 201 stores coins deposited into the coin depositing port 21 in a coin storing section (not specifically illustrated in FIG. 4). The money depositing and dispensing device 201 dispenses bills for making change to the bill dispensing port 23 in response to a change dispensing request from a control section 50 (see FIG. 7). The money depositing and dispensing device 201 dispenses coins to the coin dispensing port 24 in response to a change dispensing request from the control section 50.

The monitor 203 includes the touch panel 202 on the surface of the monitor 203. The monitor 203 is, for example, a liquid crystal panel. The monitor 203 displays information concerning accounting processing such as a total amount and the like of a transaction as images and text characters. The touch panel 202 outputs information corresponding to a touched position on the panel to the control section 50.

The receipt printer 204 includes a printer and a receipt issue port 26. The receipt printer 204 issues, from the receipt issue port 26, a receipt printed according to an instruction of the control section 50.

The card reader 205 reads information from and writes information to a credit card, a membership card, or the like inserted via a card insertion port 27.

The light emitting section 206 is set at the upper end of a display pole 28. The light emitting section 206 emits light if an abnormality occurs in the operation of the accounting apparatus 20a. The light emitting section 206 includes, for example, an LED that emits blue light and an LED that emits red light. Since the light emitting section 206 is provided at the upper end of the display pole 28, the light emitting section 206 is easily seen by not only the operator O of the POS terminal 10 but also other store clerks.

The customer C operates the accounting apparatus 20a to perform processing tendering payment for commodities by cash, a credit card, an electronic money, or the like, which is referred to as accounting processing or settlement processing in some contexts. In the accounting processing, the accounting apparatus 20a displays a total amount of due in a transaction and controls processing on the basis of the commodity registration information received from the POS terminal 10. The commodity registration information includes information such as a total amount due in the transaction being processed, commodity information of a transaction commodity, an apparatus number for the POS terminal 10 that transmitted the commodity registration information, and a name of the operator O of the POS terminal 10. The commodity registration information may include information for receipt printing, for example, sales promotion information to be include in the receipt printing.

### Attachment structure of the speaker

An attachment structure of the speaker 110 included in the POS terminal 10 is explained with reference to FIG. 5. FIG. 5 is a diagram illustrating an example of an attachment structure of the speaker 110 set in the POS terminal 10. In particular, FIG. 5 is a perspective view illustrating a state in which a head cover 112c (see FIG. 3B)has been removed. For explanation, an XYZ coordinate system in which a +X axis direction is a direction toward the customer C.

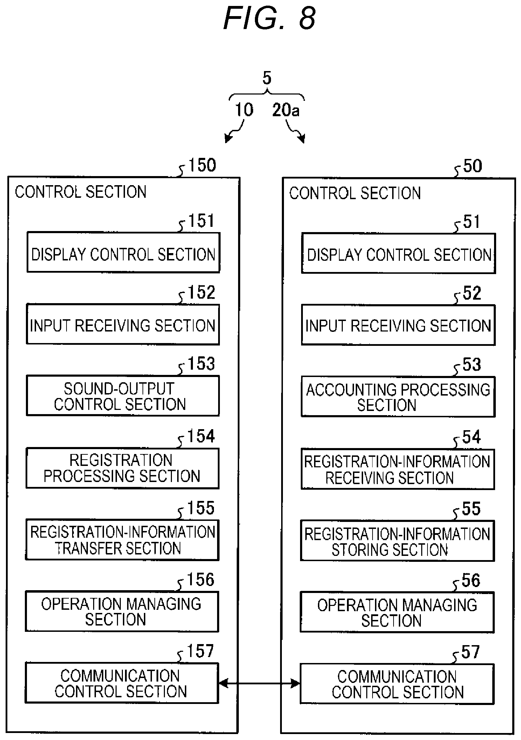

As illustrated in FIG. 5, one speaker 110 is set above the vertical scanner 101. The speaker 110 is set on the inside of a housing 111 of an upper part of the vertical scanner 101. The speaker 110 is, for example, a general dynamic speaker. The speaker 110 has as flat a frequency characteristic as possible over a frequency band of an output sound or voice signal. The speaker 110 has directional characteristics for uniformly outputting sound over a hemispherical space on its front side (the +Z-axis direction side), which is an output direction for sound. A sound or voice signal is supplied to the speaker 110 from a sound-output control section 153 (see FIG. 8) of the POS terminal 10 via an audio cable 113.

The speaker 110 and the housing 111 are disposed in a space between the two monitor attachment members 109.

A propagation path of a sound or voice signal (an audible signal) output by the speaker 110 is explained with reference to FIG. 6. FIG. 6 is a sectional view (an S-S cross section of FIG. 5) of an upper part of the vertical scanner 101 cut at the position of the speaker 110 and viewed from a -Y-axis side. FIG. 6 is drawn in a state in which the head cover 112c is attached to the upper part of the vertical scanner 101.

In the head cover 112c, as illustrated in FIG. 6, a cutout section 112d is formed corresponding to a movable range K of the monitor attachment members 109. The cutout section 112d is an example of a gap provided in the housing 112. The audible signal output by the speaker 110 is output to the outside of the POS terminal 10 through the cutout section 112d.

In the POS terminal 10, a first propagation path 120a leading from the speaker 110 to the customer C and a second propagation path 120b leading from the speaker 110 to the operator O are formed. The first propagation path 120a is a propagation path leading from the speaker 110 to the customer C through the cutout section 112d. The second propagation path 120b is a propagation path leading from the speaker 110 to the operator O through the cutout section 112d. The cutout section 112d is formed along the Y axis in the space between the two monitor attachment members 109. Therefore, the first propagation path 120a and the second propagation path 120b are provided regardless of the positioning of the monitor attachment members 109 (i.e., the direction of the operator-side monitor 104).

### Hardware configuration of the POS system

Hardware configurations of the POS terminal 10 and the accounting apparatus 20a are explained. FIG. 7 is a block diagram illustrating an example of the hardware configurations of the POS terminal 10 and the accounting apparatus 20a. The POS terminal 10 is connected to the accounting apparatuses 20b and 20c as well. The accounting apparatuses 20a, 20b, and 20c have the same hardware configuration. Therefore, to simplify explanation, only the accounting apparatus 20a is illustrated in FIG. 7.

As illustrated in FIG. 7, the POS terminal 10 includes a control section 150. The control section 150 comprises a CPU (Central Processing Unit) that executes registration processing, a ROM (Read Only Memory), which is a storage medium, and a RAM (Random Access Memory). The ROM stores various computer programs, various data, and the like executed or used by the CPU. The RAM temporarily stores data and computer programs as the CPU executes the various computer programs. The RAM stores screen display data to displayed on the operator-side monitor 104 and the customer-side monitor 107. That is, in this example, the control section 150 has the configuration of a general-purpose computer configured by software to perform specialized functions.

The control section 150 performs, via a communication I/F (Interface) 140, data communication with the accounting apparatus 20a connected by a network N. The control section 150 is connected to the vertical scanner 101 and the touch panel 103 via an I/O (Input/Output) device control section 139 and an internal bus 138. The control section 150 is connected to the operator-side monitor 104, the keypad 105, the customer-side monitor 107, an amplifier 108, and an HDD (Hard Disk Drive) 136 via the I/O device control section 139 and the internal bus 138.

Various buttons such as number buttons, subtotal buttons, and transfer buttons, are disposed on the touch panel 103 or the keypad 105. The number buttons provide instruction about the number of instances of a commodity being registered if a plurality of instances of the same commodity are being purchased. The subtotal buttons are operation buttons for ending commodity reading in a transaction, calculating a total amount of the transaction, and receiving a generation instruction for commodity registration information including the total amount of the transaction. The transfer buttons are operation buttons for sending a transfer instruction for transferring the generated commodity registration information to the accounting apparatus 20a. Disposition of these buttons on the touch panel 103 or the keypad 105 is designed as appropriate.

The amplifier 108 amplifies and outputs a voice file F3. If the voice file F3 is a file of a compression type, the voice file F3 is input to the amplifier 108 after being decompressed. The amplified voice file F3 is output from the speaker 110 via the audio cable 113.

As an operation example, the operator O presses a subtotal button to display a total amount of the transaction on the customer-side monitor 107 and thereafter presses the transfer button to transfer commodity registration information to the accounting apparatus 20a. At this time, if the accounting apparatus 20a is in an open state, the commodity registration information is transferred to the accounting apparatus 20a. In some examples, the operator O checks which accounting apparatuses out of the accounting apparatuses 20a, 20b, and 20c might be free (available) and instructs transfer of the commodity registration information to the an available one of the accounting apparatuses if possible.

When the transfer button is pressed, the POS terminal 10 ends registration processing for the customer C and shifts to registration processing for the next customer. The customer C, for whom the registration processing has been completed, moves from the POS terminal 10 to the accounting apparatus 20a (or the like) and performs accounting processing. Here, the accounting apparatus 20a receives commodity registration information of the customer C and the waits for a start of accounting processing.

In the HDD 136, a control program P1, a PLU file F1, a sales file F2, and a voice file F3 are stored.

The control program P1 is a program file executed by the control section 150 to perform various kinds of control of the POS terminal 10.

The PLU file F1 stores commodity codes uniquely allocated to the commodities and commodity information concerning the commodities such as names, prices, and commodity classifications in association with each other. If the POS terminal 10 is configured to specify commodities through generic object recognition, the PLU file F1 further stores feature values or reference images of the commodities. The feature values are data such as colors and texture states of the surfaces of the commodities read from reference images of the commodities.

The sales file F2 is a file that stores commodity registration information generated by the POS terminal 10.

The voice file F3 is a file that stores a recorded voice message or a sound to be output to the operator O and the customer C. The voice file F3 is a file of a non-compressed format (e.g., a wav format) or a compressed format (e.g., an MP3 form). The voice file F3 is read out on an instruction from the control section 150 and output from the speaker 110.

Referring back to FIG. 7, the hardware configuration of the accounting apparatus 20a is explained. As illustrated in FIG. 7, the accounting apparatus 20a includes the control section 50. The control section 50 includes a CPU that executes accounting processing and a ROM and a RAM. The ROM stores various computer programs, various data, and the like executed or used by the CPU. The RAM temporarily stores data and computer programs as the CPU executes various computer programs. The RAM stores various screen display data to be displayed on the monitor 203. That is, the control section 50 has the configuration of a general computer configured by software to implement a specialize apparatus.

The control section 50 performs, via the communication I/F 40, data communication with the POS terminal 10 connected by the network N.

The control section 50 is connected to the monitor 203 and the touch panel 202 via an I/O device control section 32 and the internal bus 31. The control section 50 is connected to the money depositing and dispensing device 201, the receipt printer 204, the card reader 205, the light emitting section 206, and the HDD 36 via the I/O device control section 32 and the internal bus 31.

A control program P2 and a transaction file F4 are stored in the HDD 36. The control program P2 is a program file executed by the control section 50 to perform various kinds of control of the accounting apparatus 20a. The transaction file F4 is a data file that stores commodity registration information received from the POS terminal 10, accounting data that records a result of accounting processing executed by the accounting apparatus 20a, and the like. The transaction file F4 is used as data that records a transaction history.

### Schematic configuration of the POS system

A schematic configuration of the POS system 5 is explained with reference to FIG. 8. FIG. 8 is a functional block diagram illustrating aspects of a POS system 5.

The control section 150 loads the control program P1 read out from the HDD 136 in the RAM and executes the control program P1 to realize, as functional sections, a display control section 151, an input receiving section 152, a sound-output control section 153, a registration processing section 154, a registration-information transfer section 155, an operation managing section 156, and a communication control section 157 illustrated in FIG. 8.

The display control section 151 displays commodity information and the like on the operator-side monitor 104 and the customer-side monitor 107 for commodities registered by the POS terminal 10.

The input receiving section 152 receives various inputs from the vertical scanner 101, the touch panel 103, and the keypad 105. For example, the input receiving section 152 receives a commodity code read by the vertical scanner 101. If a touch operation on the touch panel 103 is performed on a screen displayed on the operator-side monitor 104, the input receiving section 152 receives the touch operation as input. If the keypad 105 is operated, the input receiving section 152 receives an input from the operation of the keypad 105.

The sound-output control section 153 outputs an audible signal to the operator O or the customer C. The sound-output control section 153 is an example of the sound output section. Specifically, the sound-output control section 153 is controlled by the control program P1 to amplify, with the amplifier 108, sound or voice signals read from the voice file F3 (see FIG. 7) and cause the speaker 110 to output the sound or the voice signals. The output control section 153 outputs sound or voice signals to the customer C or the operator O without distinguishing the sounds or the voices signals by intended target.

The registration processing section 154 executes registration processing for a commodity. Specifically, if a commodity code of a commodity is input via the vertical scanner 101 or the touch panel 103, the registration processing section 154 reads commodity information for the commodity from the PLU file F1. The registration processing section 154 detects, for example, operation (pressing) of the subtotal button, ends registration processing of commodities, and decides a total amount due in a transaction. The registration processing section 154 generates commodity registration information for the transaction. The registration processing section 154 is an example of the registering section.

The registration-information transfer section 155 transfers a registration result from the registration processing section 154 to a selected accounting apparatus (e.g., the accounting apparatus 20a).

The operation managing section 156 manages the operation of the POS terminal 10.

The communication control section 157 controls transmission and reception of various kinds of information between the POS terminal 10 and, for example, the accounting apparatus 20a connected via the communication I/F 140. For example, the communication control section 157 transmits commodity registration information generated by the registration processing section 154 to the accounting apparatus 20a.

The control section 50 of the accounting apparatus 20a loads the control program P2 read out from the HDD 36 in the RAM and executes the control program P2 to realize, as functional sections, a display control section 51, an input receiving section 52, an accounting processing section 53, a registration-information receiving section 54, a registration-information storing section 55, an operation managing section 56, and a communication control section 57.

The display control section 51 generates display data and displays the generated display data on the monitor 203. For example, the display control section 51 displays a settlement screen (not illustrated in FIG. 7) on the monitor 203. The display control section 51 displays, on the light emitting section 206, for example, content of an error that occurred in the accounting apparatus 20a.

The input receiving section 52 receives various inputs from the touch panel 202 and the card reader 205. For example, if a touch operation on the touch panel 202 is performed, the input receiving section 52 receives the touch operation as input. The input receiving section 52 receives information read from a credit card or the like by the card reader 205.

The accounting processing section 53 executes accounting processing related to commodity registration information. Specifically, the accounting processing section 53 performs, on the basis of the commodity registration information transferred from the POS terminal 10, accounting processing for settling a purchase price of a commodity.

The registration-information receiving section 54 receives the commodity registration information transferred from the POS terminal 10.

The registration-information storing section 55 stores the commodity registration information received by the registration-information receiving section 54 in the HDD 36 or the like.

The operation managing section 56 manages the operation of the accounting apparatus 20a.

The communication control section 57 controls transmission and reception of various kinds of information between the accounting apparatus 20a and the POS terminal 10 connected via the communication I/F 40. For example, the communication control section 57 receives the commodity registration information and the like from the POS terminal 10 connected via the communication I/F 40.

### Processing performed by the POS terminal

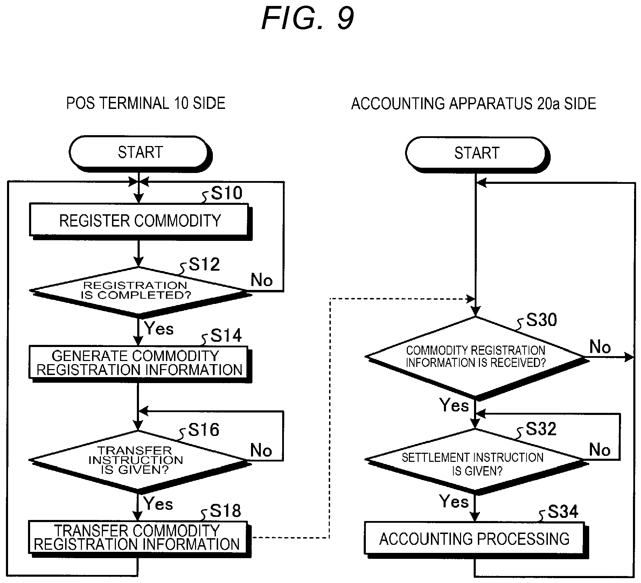

A flow of processing performed by the POS terminal 10 is explained with reference to FIG. 9. FIG. 9 is a flowchart illustrating an example of a flow of a series of processing executed by the POS system 5.

First, the flow of the processing performed by the POS terminal 10 is explained. The registration processing section 154 performs commodity registration (Act 10). Specifically, the registration processing section 154 specifies commodity information by collating, with the PLU file F1, a commodity code read via the vertical scanner 101 or input via the touch panel 103. The registration processing section 154 registers the specified commodity information as commodity registration information.

The registration processing section 154 determines whether commodity registration has been completed (Act 12) . Specifically, the registration processing section 154 determines, for example, whether the subtotal button has been pressed. When the subtotal button is pressed, the registration processing section 154 determines that the commodity registration has been completed (Yes in Act 12) and shifts to Act 14. On the other hand, when the subtotal button has not been pressed, the commodity registration is not considered completed (No in Act 12), the registration processing section 154 returns to Act 10 and performs registration of the next commodity.

If determining Yes in Act 12, that is, the commodity registration has been completed, the registration processing section 154 generates commodity registration information (Act 14).

The registration-information transfer section 155 determines whether a transfer instruction for transferring the commodity registration information to any one of the accounting apparatuses 20a, 20b, and 20c has been given (Act 16). Specifically, the registration-information transfer section 155 determines whether a transfer button or the like has been pressed and if the transfer button is pressed, determines that the transfer instruction has been given. Once the transfer instruction has been given (Yes in Act 16), the registration-information transfer section 155 shifts to Act 18. On the other hand, if the transfer instruction is not given (No in Act 16), the registration-information transfer section 155 repeats the determination in Act 16 until a timeout or the like is reached.

If determining Yes in Act 16, the registration-information transfer section 155 transfers the commodity registration information to the selected one of the accounting apparatuses 20a, 20b, and 20c in Act 18. Although not illustrated in the flowchart of FIG. 9, the sound-output control section 153 outputs sound or voice signals corresponding to a progress along operations of the flowchart of FIG. 9.

Thereafter, the operator O informs the customer C to which one of the accounting apparatuses 20a, 20b, and 20c the commodity registration information has been transferred. The customer C moves to the selected accounting apparatus. Thereafter, the POS terminal 10 returns to Act 10 and starts the registration processing for the next customer C.

### Processing performed by the accounting apparatus

A flow of processing performed by the accounting apparatus 20a to which commodity registration information has been transferred is explained with reference to FIG. 9.

The registration-information receiving section 54 determines whether commodity registration information has been received from the POS terminal 10 (Act 30) . Upon determining that the commodity registration information has been received (Yes in Act 30), the registration-information receiving section 54 shifts to Act 32. On the other hand, if the commodity registration information is not received (No in Act 30), the registration-information receiving section 54 repeats the determination in Act 30 until a timeout or the like occurs.

If the registration-information receiving section 54 determines Yes in Act 30, the operation managing section 56 determines (in Act 32) whether a settlement instruction has been given. Upon determining that the settlement instruction has been given (Yes in Act 32), the operation managing section 56 shifts to Act 34. On the other hand, if the settlement instruction is not given (No in Act 32), the operation managing section 56 repeats the determination in Act 32 until a timeout or the like occurs.

If the operation managing section 56 determines Yes in Act 32, in Act 34, the accounting processing section 53 performs accounting processing. Thereafter, the accounting processing section 53 returns to Act 30 and performs the accounting processing of the next customer.

### Explanation of another attachment structure of the speaker

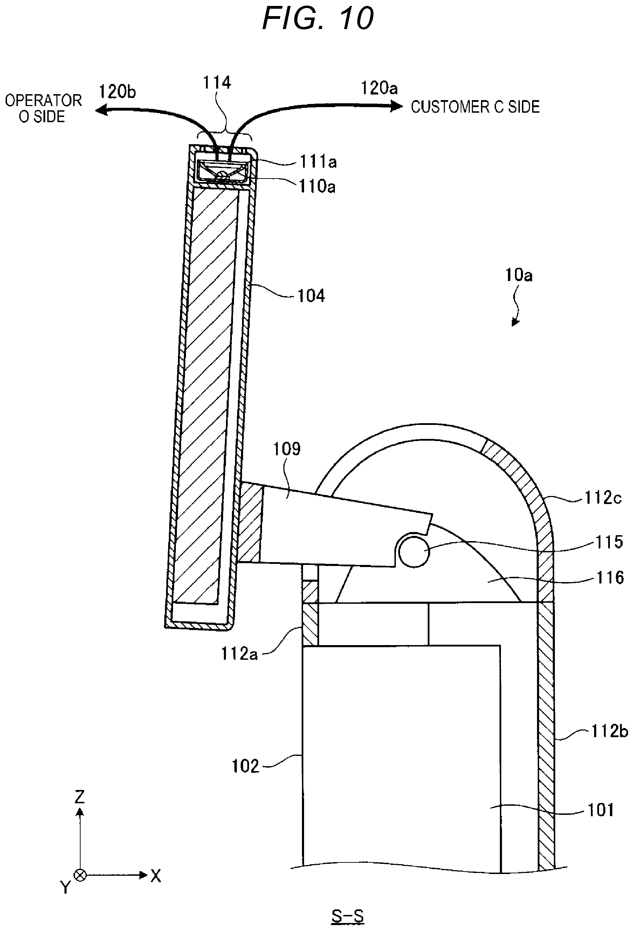

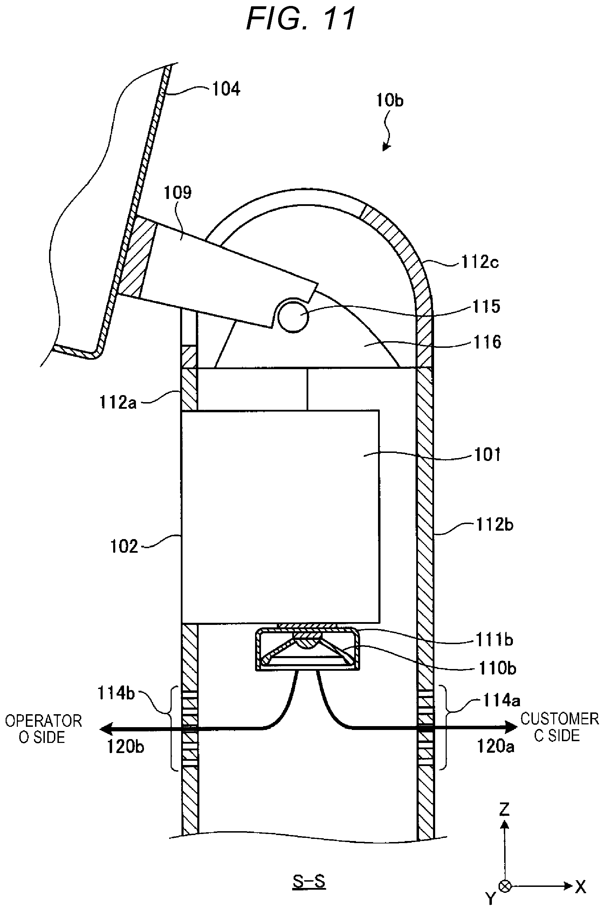

Another attachment structure of the speaker 110 is explained. FIG. 10 is a diagram illustrating an attachment structure for a speaker 110a and is a second attachment example. FIG. 11 is a diagram illustrating an attachment structure for a speaker 110b and is a third attachment example.

In the example illustrated in FIG. 10, in a POS terminal 10a, the speaker 110a is set in the top part of the operator-side monitor 104. More specifically, the speaker 110a is set on the inside of the operator-side monitor 104 while housed in a housing 111a. A plurality of small sound holes 114 are in the housing of the operator-side monitor 104 at a position facing the front surface of the speaker 110a. The sound holes 114 are an example of gaps provided in the housing of the operator-side monitor 104. An audible signal (sound or voice) output by the speaker 110a is output to the outside of the operator-side monitor 104 through the sound holes 114.

A first propagation path 120a leading from the speaker 110a to the customer C and a second propagation path 120b leading from the speaker 110a to the operator O are formed. The first propagation path 120a is a propagation path leading from the speaker 110a to the customer C through the sound holes 114. The second propagation path 120b is a propagation path leading from the speaker 110a to the operator O through the sound holes 114.

In the example illustrated in FIG. 11, in a POS terminal 10b, the speaker 110b is set below the vertical scanner 101. More specifically, the speaker 110b is set below the vertical scanner 101 with the speaker 110b housed in a housing 111b. A plurality of small sound holes 114b are formed in the front cover 112a near the speaker 110b. A plurality of small sound holes 114a are also formed in the rear cover 112b near the speaker 110b. The sound holes 114a are an example of gaps provided in the rear cover 112b. The sound holes 114b are an example of gaps provided in the front cover 112a. An audible signal output by the speaker 110b is output to the outside of the POS terminal 10b through the sound holes 114a. An audible signal output by the speaker 110b is output to the outside of the POS terminal 10b through the sound holes 114b.

A first propagation path 120a leading from the speaker 110b to the customer C and a second propagation path 120b leading from the speaker 110b to the operator O are formed. The first propagation path 120a is a propagation path leading from the speaker 110b to the customer C through the sound holes 114a. The second propagation path 120b is a propagation path leading from the speaker 110b to the operator O through the sound holes 114b.

As explained above, in the POS terminal 10 of an embodiment, if the registration processing section 154 performs registration processing according to the operation of the operator the sound-output control section 153 outputs an audible signal concerning the registration processing to the operator O and the customer C from one speaker 110. Therefore, one speaker 110 can provide information to both the operator O and the customer C.

In the POS terminal 10 in an embodiment, the sound-output control section 153 outputs an audible signal from the cutout section 112d (a gap) of the housing 112 (more particularly, the head cover 112c) of the POS terminal 10. Therefore, a propagation path of the audible signal can be surely and easily formed.

In the POS terminal 10 (and POS terminal 10a), the registration processing section 154, which reads code information attached to a commodity, includes the vertical scanner 101. The sound-output control section 153 outputs an audible signal to the customer C via the first propagation path 120a from the speaker 110 (or speaker 110a) set above the vertical scanner 101 and to the operator O via the second propagation path 120b from the speaker 110 (or speaker 110a) . Therefore, a single speaker 110 (or speaker 110a) can provide information to the operator O and the customer C. In particular, since the speaker 110 (speaker 110a) is set above the vertical scanner 101, the audible signal can be output from a position near the ears of the operator O and the customer C. Therefore, it is possible to output sounds or voice messages that the operator O and the customer C can more easily hear.

In the POS terminal 10b, the registration processing section 154 includes the vertical scanner 101. The sound-output control section 153 outputs an audible signal to the customer C via the propagation path 120a from the speaker 110b set below the vertical scanner 101 and to the operator O via the second propagation path 120b from the speaker 110b. Therefore, a single speaker 110b can provide information to both the operator O and the customer C. In particular, since the speaker 110b is set below the vertical scanner 101, dirt and dust are less likely to adhere to the speaker 110b.

In the POS terminal 10 (10a, 10b), the sound-output control section 153 outputs an audible signal output to the customer C and an audible signal output to the operator O without distinguishing between the audible signals by intended target. Therefore, it is unnecessary to distinguish to whom the audible signals are to be transmitted. Therefore, it is possible to simplify the configuration of the control program P1 for controlling the sound-output control section 153.

An example embodiment is applied to a POS system 5 of the semi-self type. However, embodiments of the present disclosure can also be applied to a POS terminal of a face-to-face type in which the operator O and the customer C perform registration processing and accounting processing while facing toward each other.

The control program P1 (P2) executed by the control section 150 (50) may be stored in the HDD 136 (36) or may be recorded in a non-transitory computer-readable recording medium such as a CD-ROM, a flexible disk (FD), a CD-R, or a DVD (Digital Versatile Disk) as a file of an installable form or an executable form. The control program P1 (P2) may likewise be stored on a computer connected to a network and downloaded through the network. Furthermore, the control program P1 (P2) may be provided or distributed through a network such as the Internet.

Example embodiments are explained above. However, these embodiments are presented as some possible examples and are not intended to limit the scope of the present disclosure. Other embodiments of the present disclosure can be implemented in other various forms. Various omissions, substitutions, and changes can be made without departing from the scope of the present invention as defined by the appended claims. The embodiment and modifications of the embodiment are included in the scope and the gist of the invention and included in the inventions described in claims and the scope of equivalents of the inventions.

## Claims

1. A sales register apparatus, comprising:
a register to perform registration processing for registering a commodity being purchased by a customer; and
a sound output section with a single speaker configured to output sounds concerning the registration processing to an operator of the register on one side of the register and the customer on an opposite side of the register.

2. The sales register apparatus according to claim 1, wherein the sound output section outputs an audible signal from a gap in a housing of the register.

3. The sales register apparatus according to claim 1 or 2, wherein
the register comprises a vertical scanner configured to read code information attached to the commodity,
the speaker is above the vertical scanner, and
the sound output section simultaneously outputs an audible signal via a first sound propagation path from the speaker to the customer and a second sound propagation path from the speaker to the operator.

4. The sales register apparatus according to any of claims 1 to 3, wherein a primary sound output direction of the speaker is upward.

5. The sales register apparatus according to claim 4, wherein
the register includes an adjustable display mount above the vertical scanner for mounting an operator display, and
the speaker is positioned such that each of the first and second sound propagation paths comprises a portion passing through an opening in the adjustable display mount.

6. The sales register apparatus according to any of claims 1 to 5, wherein
the register includes an adjustable display mount for mounting an operator display, and
the speaker is positioned such that each of the first and second sound propagation paths comprises a portion passing through an opening in the adjustable display mount.

7. The sales register apparatus according to any of claims 1 to 6, wherein
the register comprises a vertical scanner configured to read code information attached to the commodity,
the speaker is below the vertical scanner, and
the sound output section simultaneously outputs an audible signal via a first sound propagation path from the speaker to the customer and a second sound propagation path from the speaker to the operator, wherein preferably a primary sound output direction of the speaker is downward.

8. The sales register apparatus according to any of claims 1 to 7, wherein each of the first and second sound propagation paths includes a plurality of holes in an outer surface of a housing of the register.

9. The sales register apparatus according to any of claims 1 to 8, wherein the sound output section outputs audible signals for the customer and audible signals for the operator without distinguishing audible signals types by intended recipient.

10. The sales register apparatus according to any of claims 1 to 9, further comprising:
an operator display mounted on the register, wherein
the speaker is on an upper end portion of the operator display.

11. The sales register apparatus according to any of claims 1 to 10, wherein the sounds include at least one of recorded voice messages and tones.

12. A point-of-sale terminal, comprising:
a housing having a customer side and an operator side;
a vertical scanner in the housing for reading commodity information;
a tiltable display mount on the housing above the vertical scanner;
an operator display mounted on the tiltable display mount to face the operator side; and
a sound output section with a single speaker configured to simultaneously output sounds concerning registration processing to an operator on the operator side of the housing and a customer on the customer side of the housing, wherein
the sound output section simultaneously outputs the sound from the single speaker via a first sound propagation path from the speaker to the customer and a second sound propagation path from the speaker to the operator.

13. The point-of-sale terminal according to claim 12, wherein the speaker is
on an upper end of the operator display and facing upward, or
on an upper end of the housing adjacent to the tiltable display mount.

14. The point-of-sale terminal according to claim 12 or 13, wherein the speaker is in the housing below the vertical scanner and facing downward, wherein preferably each of the first and second sound propagation paths includes a plurality of holes in an outer surface of the housing.

15. The point-of-sale terminal according to any of claims 12 to 14, wherein the sound output section outputs sounds intended for the customer and sounds intended for the operator without distinguishing audible signals types by intended recipient.
